## Europäisches Patentamt
## European Patent Office
## Office européen des brevets

(19)

(11) Numéro de publication: **0 200 582**
**B1**

## FASCICULE DE BREVET EUROPÉEN

(12)

(45) Date de publication du fascicule du brevet:
**10.08.88**

(51) Int. Cl.⁴: **B 60 R 13/06**

(21) Numéro de dépôt: **86400509.5**

(22) Date de dépôt: **11.03.86**

(54) Joint d'étanchéité à profil tubulaire.

(30) Priorité: **22.03.85 FR 8504447**

(43) Date de publication de la demande:
**05.11.86 Bulletin 86/45**

(45) Mention de la délivrance du brevet:
**10.08.88 Bulletin 88/32**

(84) Etats contractants désignés:.
**BE DE GB IT**

(56) Documents cité:
**EP-A-0 116 264**
**DE-A-2 355 806**
**FR-A-2 541 176**
**US-A-3 837 957**

(73) Titulaire: **COMPAGNIE DES PRODUITS INDUSTRIELS DE L'OUEST (C.P.I.O.), Boîte Postale 1226 Zone Industrielle de Nantes Carquefou, F-44023 Nantes Cédex (FR)**

(72) Inventeur: **Connen, Yves, Allées les Courgains, F-35500 Vitre (FR)**
Inventeur: **Paris, Roland, L'Olonière Erbree, F-35500 Vitre (FR)**

(74) Mandataire: **Réal, Jacques, Régie Nationale des Usines Renault SCE 0804, F-92109 Boulogne Billancourt Cedex (FR)**

LIBER, STOCKHOLM 1988

## Description

La présente invention se rapporte à un joint d'étanchéité et de protection à profil tubulaire s'adaptant aux variations géométriques de son cadre de fixation.

De tels joints se rencontrent chaque fois que l'on veut assurer une étanchéité entre un panneau de fermeture et le cadre d'une ouverture, notamment sur un véhicule automobile au niveau des portes, du coffre, etc... mais également sur les équipements électroménagers, tels que lave-vaisselle, réfrigérateur, etc...

De tels joints sont généralement constitués d'une agrafe en U, comportant une armature métallique, qui assure l'effet de pince, laquelle est recouverte d'élastomère ou de plastique, déposé par co-extrusion.

Des lèvres internes assurent l'étanchéité sur le cadre.

Le joint lui-même est constitué d'un tube, généralement réalisé en caoutchouc cellulaire. Il est le plus souvent obtenu en continu, par co-extrusion et co-vulcanisation en même temps que l'agrafe.

L'encadrement sur lequel se monte le joint comprend le plus souvent des angles ou des arrondis, des courbes, des changements de plans. Toutes ces variations geometriques ont pour consequence de mettre le joint soit en extension, soit en compression. Celui-ci est par suite déformé, les défauts ainsi créés détruisant la qualité de l'étanchéité.

Pour éviter ces déformations lors des prises de rayon de faible amplitude, plusieurs techniques sont actuellement utilisées:

- mise en place dans le tube ou le profilé tubulaire d'un boudin en caoutchouc spongieux ou en mousse de polyurethane;

- injection dans le tube d'une mousse spéciale s'expansant à température ambiante ou à l'aide d'un apport de calories;

- surmoulage dans les zones de variation d'un caoutchouc ou d'un élastomère thermoplastique afin d'obtenir une forme épousant parfaitement le volume à remplir;

- utilisation d'un procédé d'extrusion en continu faisant varier la forme du profilé en augmentant ou en diminuant l'épaisseur du tube.

Tous ces procédés ont un inconvénient majeur: ils durcissent le profilé et augmentent de ce fait l'effort de fermeture. De plus, ils entraînent une augmentation importante du prix de revient, soit parce qu'ils nécessitent une opération supplémentaire d'un cout élevé, soit parce qu'ils obligent à diminuer la vitesse d'extrusion du joint d'étanchéité.

On connait également, du brevet US-A- 3 837 957 un procédé de réalisation d'un joint d'étanchéité à profil tubulaire, notamment pour panneaux de fermeture de véhicules automobiles, selon lequel le joint est préformé avant sa vulcanisation totale en fonction du contour de son support, auquel il sera adapté après vulcanisation complète résultant d'un cycle de chauffage et de refroidissement permettant de lui donner la mémoire de la forme précise des zones correspondantes du support; toutefois, la conformation ci-dessus du joint est obtenue au moyen d'un noyau interne de forme adéquate glissé dans l'ébauche et retiré après sa vulcanisation.

Ce procédé présente plusieurs inconvénients:

- il est limité dans la variété et dans la précision des formes obtenues,

- il donne lieu à des difficultés importantes lorsqu'il s'agit de retirer le noyau,

- il diminue gradement la vitesse d'exécution du cycle de fabrication.

La presente invention se rapporte à des joints à profil modifié localement ne présentant pas les inconvénients décrits ci-dessus du fait que ces joints sont réalisés par un procédé du type divulgué par US-A- 3 837 957 et présentant les caractéristiques techniques énoncées dans la partie caractérisante de la revendication 1.

Elle sera décrite au regard des figures 1 à 6 ci-jointes, données à titre d'exemple non limitatif et qui se rapportent respectivement:

- la figure 1, à la vue en perspective du montage d'un joint selon un état de la technique antérieure, représentant un type de déformation indésirable;

- la figure 2, à une vue en coupe transversale du formage d'un coude du joint d'étanchéité à profil tubulaire;

- la figure 3, à une vue en perspective de l'opération de la figure precédénte;

- la figure 4, à une vue en coupe transversale d'une première variante de l'opération selon la figure 2 ;

- la figure 5, à une vue en perspective d'une variante du joint selon l'invention;

- la figure 6, à une coupe transversale d'une autre variante de traitement du joint selon l'invention.

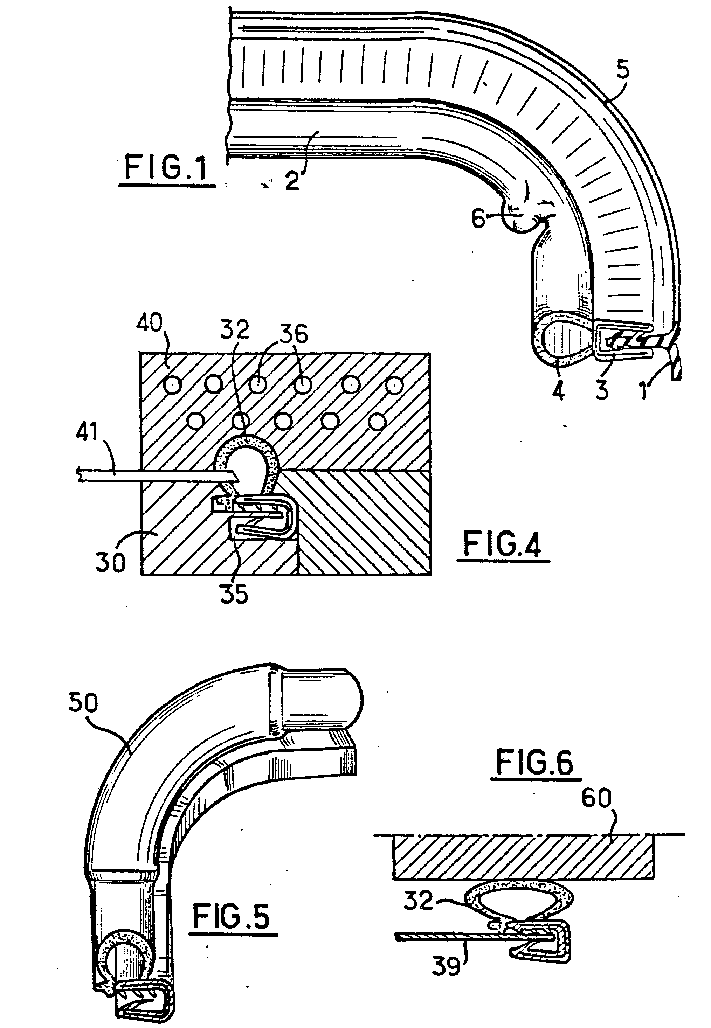

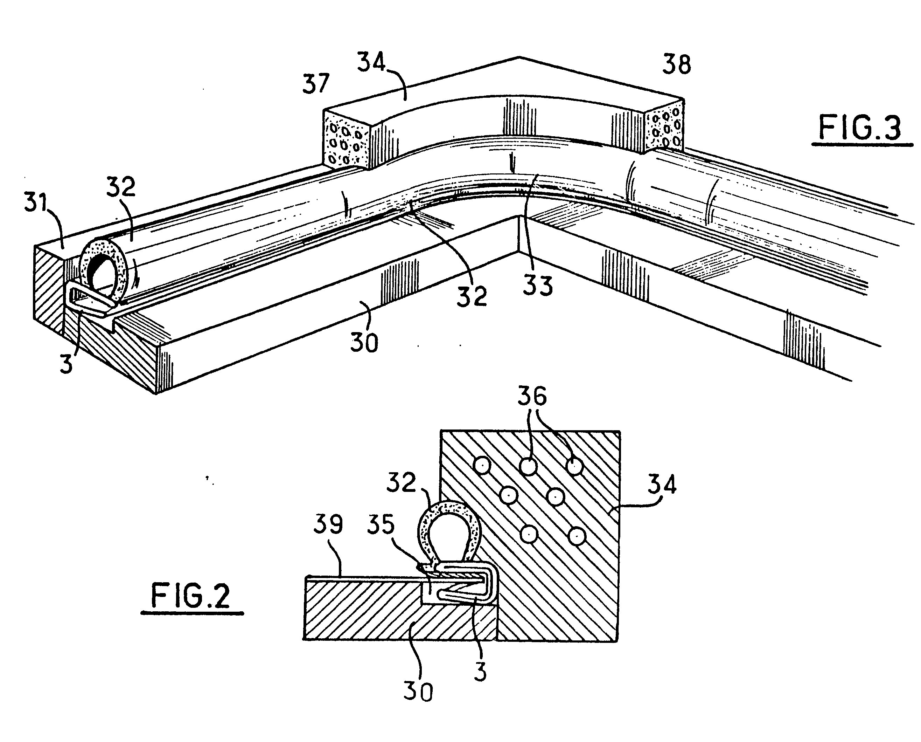

En référence à la figure 1, on voit l'encadrement d'une ouverture 1 pourvue d'un joint 2 classique généralement utilisé. Il est maintenu sur l'encadrement par une agrafe en U 3, assurant un effet de pince, à laquelle est solidarisée un tube en élastomère 4. On constante qu'au niveau du coude 5 des déformations 6 prennent naissance nuisibles à l'étanchéité recherchée.

L'inconvenient ci-dessus est évité en utilisant les joints selon la présente invention, dont le profil est localement modifié avant son application sur son support.

Le principe de l'invention consiste à utiliser un procédé de conformation à chaud qui permet de donner au joint l'orientation et la géométrie adequate lui assurant un montage sans déformation sur le cadre qui le reçoit.

A cette fin, lors de l'extrusion du profil constituant le joint 4, on repère sur sa longueur les zones correspondant à une courbe du support sur lequel il sera positionné. Au niveau des marquages ainsi obtenus, le profil 4 sera ultérieurement localement déformé en conséquence au cours d'une opération spécifique, antérieure à son montage sur le cadre de fixation. Ceci permet d'absorber les variations de dimensions découlant de son positionnement final, sans donner lieu aux déformations 6 nuisibles pour l'étanchéité et visibles à la figure 1.

Pour réaliser l'opération ci-deseus, le profil extrudé est préalablement coupé aux longueurs correspondant aux joints à obtenir, puis traité au moyen d'un conformateur spécifique à la forme du joint à obtenir. Un tel dispositif est visible à la figure 3.

Une semelle 30 comporte à sa périphérie une bordure 31 le long de laquelle est guidée l'ébauche de joint 32. Au niveau du coude 33 repéré lors de l'opération d'extrusion, la bordure 31, est pourvue d'un mors 34 ; sa face en contact avec le coude 33 est conformée de façon à donner au joint une forme définitive correspondant à sa position sur le support 1.

Sur le trajet du joint 32, la semelle présente un évidement 35 à l'intérieur duquel se déplace la partie 3 constituant l'agrafe en U, guidant ainsi le passage dudit joint 32 et assisté en celà par l'élément 39.

Le mors 34 possède des moyens de chauffage et de refroidissement, schématisés par des canaux 36 à l'intérieur desquels peuvent circuler des fluides adéquats, arrivant en 37 dans le conformateur et s'en échappant en 38. Naturellement tout moyen équivalent pourrait remplacer cette circulation de fluide.

Le procédé de mise en forme du joint 32 s'effectue de la manière suivante:

- on présente l'élément 32 de joint obtenu par extrusion en une opération préalable, marqué au niveau du coude à conformer et découpé à la longueur finale, dans l'évidement 35 de la semelle 30 du conformateur jusqu'à ce que le repérage du coude 33 se situe au centre du mors 34.

On élève alors la température de ce dernier, tout en insufflant un gaz ou un fluide neutres à l'intérieur du tube 32 dont les extrémités ont été préalablement obturées, par exemple par pinçage. La mise sous pression qui en résulte permet de supprimer les déformations tels que 6 de la figure 1, apparue lors du pliage au niveau du coude 33. Le refroidissement du joint 32, de préférence accéléré par circulation d'un fluide froid dans les canaux 36 du mors 34, intervient "in situ". Une légère sous-cuisson de l'élastomère constitutif du tube 32, lors de la vulcanisation en continu après son extrusion, peut faciliter l'opération ci-dessus, et en particulier la phase de post-cuisson locale au niveau du coude 33.

La variante illustrée à la figure 4 montre un formage complètement guidé qui permet d'obtenir un profilé suivant en tout point la courbure du cadre qui recevra le joint. On remarque qu'à la différence du dispositif de la figure 3, le mors 40 enveloppe totalement la section du tube 32.

Ledit mors 40 peut être constitué par un moule en plusieurs parties, qui recouvre une quinzaine de centimètres du tube 32 au niveau du coude 33.

Les extrémités du tube 32 pincées on insuffle alors un gaz neutre sous pression à l'intérieur, au moyen d'une seringue 41 introduite dans une partie non travaillante du joint, de façon à ne pas nuire à ses qualités d'étanchéité au montage.

Par le procédé ci-dessus, on peut en fonction de l'empreinte du moule, donner lieu à des augmentations de diamètre 50 (figure 5), situées au niveau du coude ou sur une partie rectiligne, ou encore à des changements de profil aboutissant par exemple à une section localement elliptique, comme selon la figure 6.

L'intérêt de cette dernière transformation réside dans le fait qu'il est ainsi possible d'absorber une surépaisseur locale du support (épaisseur de tôle supplémentaire sur quelques centimètres de longueur) sans entraîner une surépaisseur concomitante du joint.

Ce résultat est obtenu par pressage local de la paroi du tube 32 sur un conformateur 60, suivi d'une élévation de la température dudit tube 32 par un flux d'air chaud et de son refroidissement, entraînant la mémorisation locale de la nouvelle forme obtenue.

Bien que cette opération peut être effectuée sans surpression interne, elle est réalisée avec surpression interne dans le cadre de l'invention définie dans la revendication 1.

## Revendications

1. Procédé de réalisation d'un joint (32) d'étanchéité à profil tubulaire, notamment pour panneaux de fermeture de véhicules automobiles, du type selon lequel on préforme le joint (32) avant sa vulcanisation totale en fonction du contour de son support, auquel il sera adapté après vulcanisation complète résultant d'un cycle de chauffage et de refroidissement permettant de lui donner la mémoire de la forme précise des zones correspondantes du support, caractérisé par le fait que ledit joint (32) est traité dans un conformateur correspondant au contour recherché, qu'après obstruction des extrémités dudit joint (32) une surpression interne y est crée plaquant ainsi celui-ci contre les parois du conformateur, ce dernier imposant alors aux zones (33) du joint à déformer le cycle de chauffage et de refroidissement.

2. Dispositif de mise en oeuvre du procédé selon la revendication 1, caractérisé en ce qu'il est constitué d'une semelle (30) comportant à sa périphérie une bordure (31) sur laquelle prend appui un mors (34) présentant la forme que l'on veut donner au profil tubulaire (32) du joint, un évidemment (35) et un élément (39) étant prévus dans la semelle (30) le long de la bordure (31) afin de positionner avec précision l'agrafe du joint et de guider ainsi ce dernier.

3. Dispositif selon la revendication 2, caractérisé en ce que le mors (34) comporte des moyens (36) de chauffage et de refroidissement.

4. Dispositif selon la revendication 3, caractérisé en ce que le mors (40) enveloppe totalement la section du tube (32).

5. Dispositif selon la revendication 4, caractérisé en ce qu'une seringue (41) est introduite à travers le mors (40) jusque dans une partie non travaillante du joint (32).

6. Dispositif selon la revendication 4, caractérisé en ce que le mors (40) présente une augmentation de diamètre par rapport au joint (32).

7. Joint d'étanchéité obtenu selon le procédé de la revendication 1, caractérisé en ce qu'il possède, préalablement à son montage, une forme adaptée au support sur lequel il doit être positionné.

8. Joint d'étanchéité selon le revendication 7, caractérisé en ce que sa forme comporte un coude.

9. Joint d'étanchéité selon la revendication 7, caractérisé en ce que sa forme comporte un changement de diamètre.

10. Joint d'étanchéité selon la revendication 7, caractérisé en ce que sa forme comporte un aplatissement.

**Patentansprüche**

1. Verfahren zur Herstellung eines rohrförmigen Dichtungsprofils (32), insbesondere für Schließklappen von Kraftfahrzeugen, wobei die Dichtung (32) vor ihrer endgültigen Vulkanisierung als Funktion der Form ihrer Halterung vorgeformt wird, an die sie nach ihrer endgültigen Vulkanisierung angepaßt ist, die aus einer Folge von Erwärmungen und Abkühlungen besteht, um ihr so die exakte Anpassung an die entsprechenden Bereiche der Halterung zu erteilen, dadurch gekennzeichnet, daß die Dichtung (32) in einer Streckvorrichtung behandelt wird, die der gewünschten Form entspricht, daß nach dem Verschließen der Enden der Dichtung (32) ein innerer Überdruck erzeugt wird, der sie an die Wände der Streckvorrichtung preßt, so daß letztere den Bereichen (33) der zu verformenden Dichtung die Folge von Erwärmungen und Abkühlungen überträgt.

2. Vorrichtung zur Durchführung des Verfahrens nach Anspruch 1, dadurch gekennzeichnet, daß sie aus einer Schiene (30) besteht, die entlang ihres Umfangs einen Rand (31) aufweist, auf dem sich eine Spannbacke (34) abstützt, welche diejenige Form aufweist, die dem rohrförmigen Profil (32) der Dichtung zu erteilen ist, wobei eine Aussparung (35) und ein Teil (39) in der Schiene (30) entlang des Randes (31) vorgesehen ist, um den Falz der Dichtung präzise auszurichten und letztere demzufolge zu führen.

3. Vorrichtung nach Anspruch 2, dadurch gekennzeichnet, daß die Spannbacke (34) eine Anordnung (36) zum Erwärmen und zum Abkühlen aufweist.

4. Vorrichtung nach Anspruch 3, dadurch gekennzeichnet, daß die Spannbacke (40) den Querschnitt des Rohrs (32) vollständig umgibt.

5. Vorrichtung nach Anspruch 4, dadurch gekennzeichnet, daß eine Spritze (41) in die Spannbacke (40) eingreift und bis in den ruhenden Teil der Dichtung (32) ragt.

6. Vorrichtung nach Anspruch 4, dadurch gekennzeichnet, daß die Spannbacke (40) eine Vergrößerung des Durchmessers bezüglich der Dichtung (32) aufweist.

7. Dichtung hergestellt nach dem Verfahren von Anspruch 1, dadurch gekennzeichnet, daß sie vor ihrer Montage eine Form aufweist, die an die Halterung angepaßt ist, auf der sie aufgesetzt werden soll.

8. Dichtung nach Anspruch 7, dadurch gekennzeichnet, daß ihre Form eine Krümmung enthält.

9. Dichtung nach Anspruch 7, dadurch gekennzeichnet, daß ihre Form eine Durchmesserveränderung enthält.

10. Dichtung nach Anspruch 7, dadurch gekennzeichnet, daß ihre Form eine Abflachung enthält.

**Claims**

1. A process for producing a seal (32) of tubular profile, in particular for closure panels of motor vehicles, of the type wherein the seal (32) is preformed prior to total vulcanisation thereof in dependence on the contour of its support, to which it will te adapted after complete vulcanisation resulting from a heating and cooling cycle permitting it to te provided with a memory of the precise shape of the corresponding zones of the support, characterised in that said seal (32) is treated in a shaping means corresponding to the desired contour, that after the ends of said seal (32) have been closed off an increased internal pressure is created therein, thereby pressing the seal against the walls of the shaping means, the latter then imposing the heating and cooling cycle on the zones (33) of the seal to be deformed.

2. Apparatus for carrying out the process according to claim 1 characterised in that it is formed by a base portion (30) comprising at its periphery a rim (31) on which is supported a jaw member (34) of the shape which is to be imparted to the tubular profile (32) of the seal, a recess (35) and an element (39) being provided in the base portion (30) along the rim (31) for precise positioning of the fastener of the seal and for thereby guiding the seal.

3. Apparatus according to claim 2 characterised in that the jaw (34) comprises heating and cooling means (36).

4. Apparatus according to claim 3 characterised in that the jaw (40) completely encloses the section of the tube (32).

5. Apparatus according to claim 4 characterised in that a syringe (41) is introduced through the jaw (40) into a non-operative part of the seal (32).

6. Apparatus according to claim 4 characterised in that the jaw (40) has an increase in diameter in relation to the seal (32).

7. A seal produced by the process according to claim 1 characterised in that, prior to mounting thereof it is of a shape which is adapted to the support on which it is to be positioned.

8. A seal according to claim 7 characterised in that the shape thereof includes an elbow bend.

9. A seal according to claim 7 characterised in that the shape thereof includes a change in diameter.

10. A seal according to claim 7 characterised in that the shape thereof comprises a flattening.

0 200 582

FIG.1

FIG.4

FIG.6

FIG.5

FIG.3

FIG.2